# EUROPÄISCHE PATENTANMELDUNG

(11) **EP 4 489 237 A1**
(43) Veröffentlichungstag der Anmeldung: **08.01.2025**
(21) Anmeldenummer: 23183997.8
(22) Anmeldetag: 06.07.2023
(51) Int. Cl.: H02B 1/056, H02B 1/06, H02B 1/20, H02B 1/04

(54) **FRONTPLATTENABSCHNITT, INSTALLATIONSGERÄT UND ANORDNUNG ZUR BERÜHRUNGSSICHEREN MONTAGE AN EINEM STROMSAMMELSCHIENENSYSTEM**

(71) Anmelder: Wöhner Besitz GmbH, 96472 Rödental (DE)
(72) Erfinder: Masel, Joram, 96328 Küps (DE); Steinberger, Philipp, 96472 Rödental (DE)
(74) Vertreter: 2s-ip Schramm Schneider Bertagnoll Patent- und Rechtsanwälte Part mbB

(57) **Zusammenfassung**

Frontplattenabschnitt (1) für eine Anordnung zur berührungssicheren Montage von Installationsgeräten (100) an einem Stromsammelschienensystem mit zumindest einer in einer ersten Richtung (y) verlaufenden Stromsammelschiene (40), wobei der Frontplattenabschnitt (1) das Stromsammelschienensystem vor frontseitiger Berührung schützt, wobei der Frontplattenabschnitt (1) auf seiner Montageebene (5) Durchlassschlitze (10) aufweist, durch welche die Installationsgeräte (100) mit Füßen (110) hindurchgreifen, um auf der Montageebene (5) angeordnet und auf das Stromsammelschienensystem aufgesetzt zu werden, und wobei auf der Montageebene (5) Vorsprünge (20) angeordnet sind, welche die montierten Installationsgeräte (100) gegen Bewegung in einer zweiten Richtung (x) blockieren, wobei die zweite Richtung (x) orthogonal zur ersten Richtung (y) ist.

## Beschreibung

Die vorliegende Erfindung betrifft einen Frontplattenabschnitt, ein Installationsgerät und eine Anordnung zur berührungssicheren Montage von Installationsgeräten an einem Stromsammelschienensystem

Eine derartiger Frontplattenabschnitt ist frontseitig auf der Anordnung platziert und bewahrt allgemein Menschen vor Stromschlägen beim Hantieren mit elektrischen Installationsgeräten wie z.B. Sammelschienenadaptern an Stromsammelschienensystemen, die unter Spannung stehen. Die Anordnung wird auch als Berührungsschutzsystem bezeichnet.

Damit elektrische Installationsgeräte auf die Stromsammelschienen aufgesteckt oder von diesen entfernt werden können, weist der Frontplattenabschnitt auf seiner Montageebene Durchlassschlitze auf, durch welche die Installationsgeräte mit Fü-ßen hindurchgreifen. Mit den Füßen lassen sich die Sammelschienenadapter dann auf der Montagesite anordnen und auf die Stromsammelschienen aufsetzen. Die Füße können hakenförmig ausgestaltet sein, welche eine Sammelschiene hintergreifen. Mit solchen Haken können die Geräte durch Aufschieben an den Stromsammelschienen an- oder eingehängt oder verankert werden. Auch können die Füße als Auflagen ausgestaltet sein, die durch Aufschrauben des Sammelschienenadapters gegen die Sammelschiene gepresst werden.

Es gibt Frontplattenelemente, die eine sich über die gesamte Basis des Berührungsschutzsystems erstreckende und plane Montageebene für die Installationsgeräte bilden. Ein solcher Frontplattenabschnitt ist z.B. aus EP 3 446 381 A1 bekannt.

Nachteilig an derartigen Frontplattenabschnitten ist, dass die elektrischen Geräte, einmal installiert, durch unbeabsichtigtes Berühren oder durch Vibrationen aus der Verankerung gelöst werden können, etwa wenn ein Gerät hierdurch entgegen der Richtung, in der es an- oder eingehängt wurde, bewegt wird.

Aufgabe ist es, einen Frontplattenabschnitt, ein Installationsgerät und eine Anordnung zur berührungssicheren Montage von Installationsgeräten an einem Stromsammelschienensystem bereitzustellen, welche die genannten Nachteile zumindest teilweise beseitigen.

Diese Aufgabe wird durch den Frontplattenabschnitt gemäß Anspruch 1 gelöst. Vorteilhafte Weiterbildungen sind in den abhängigen Ansprüchen definiert.

Bereitgestellt wird demnach ein Frontplattenabschnitt für eine Anordnung zur berührungssicheren Montage von Installationsgeräten an einem Stromsammelschienensystem mit zumindest einer in einer ersten Richtung verlaufenden Stromsammelschiene, wobei der Frontplattenabschnitt das Stromsammelschienensystem vor frontseitiger Berührung schützt, wobei der Frontplattenabschnitt auf seiner Montageebene Durchlassschlitze aufweist, durch welche die Installationsgeräte mit Füßen hindurchgreifen, um auf der Montageebene angeordnet und auf das Stromsammelschienensystem aufgesetzt zu werden, und
wobei auf der Montageebene Vorsprünge angeordnet sind, welche die montierten Installationsgeräte gegen Bewegung in einer zweiten Richtung blockieren, wobei die zweite Richtung orthogonal zur ersten Richtung ist.

Ein Lösen der Installationsgeräte erfordert also eine gezielte Handlung, um das Blockieren gegen eine Bewegung in der zweiten Richtung aufzuheben.

Vorteilhafte Weiterbildungen umfassen folgende Merkmale:
Die erste Richtung eine horizontale Richtung sein, und die zweite Richtung kann die positive (nach oben zeigende) vertikale Richtung sein.

Die Vorsprünge können sich in positiver vertikaler Richtung verjüngen.

Die Vorsprünge können jeweils eine in vertikaler Richtung verlaufende keilförmige Fläche aufweisen.

Die Vorsprünge können jeweils eine in von der Montageebene vorspringende und in negativer vertikaler Richtung gerichtete Anschlagsfläche aufweisen.

Die Vorsprünge können regelmäßig über die Montageebene verteilt sein.

Die Vorsprünge können in die Montageebene integriert sein.

Die Vorsprünge können auf einer horizontalen Geraden jeweils zwischen zwei Durchlassschlitzen angeordnet sein.

Das Frontplattenelement kann mehrere untereinander angeordnete horizontale Reihen von Durchlassschlitzen aufweisen, und die Vorsprünge können nur zwischen zwei Durchlassschlitzen der obersten Reihe angeordnet sein.

Die Vorsprünge können ausgestaltet sein, dass sie die Bewegung der Installationsgeräte im Zusammenwirken mit Strukturen an den Installationsgeräten verhindern.

Die Vorsprünge können Teile von lösbaren Rastvorrichtungen realisieren.

Die Vorsprünge können ausgestaltet sein, dass sie ein Aufschieben der Installationsgeräte über die keilförmige Fläche in negativer vertikaler Richtung gestatten.

Die Erfindung umfasst auch ein Installationsgerät zur Montage an der Montageebene eines Frontplattenabschnitts wie oben beschrieben, aufweisend auf seiner bei Montage der Montageebene zugewandten Rückseite:
Füße, welche zum Hindurchgreifen durch die Durchlassschlitze des Frontplattenabschnitts ausgestaltet sind, und

Strukturen, welche bei Montage gegen die Vorsprünge des Frontplattenabschnitts anschlagen.

Vorteilhafte Weiterbildungen des Installationsgeräts umfassen folgende Merkmale:
Die Strukturen können zu den Vorsprüngen komplementäre Formen aufweisen.

Die Strukturen können jeweils einen Bolzen aufweisen, der durch Kraft einer Feder in einer vorbestimmten Position bezüglich der Fläche gehalten wird.

Hierbei kann der Bolzen eine Angriffsstruktur aufweisen, mittels derer der Bolzen entgegen der Federkraft aus der vorbestimmten Position zurückbewegt werden kann, vorteilhafterweise nur mittels eines Werkzeugs. Das Lösen des Installationsgeräts erfordert also ein gezieltes Handeln, vorteilhafterweise nur mit einem Werkzeug.

Ferner umfasst die Erfindung auch eine Anordnung zur berührungssicheren Montage von Installationsgeräten, insbesondere solchen wie oben beschrieben, an einem Stromsammelschienensystem mit zumindest einer in horizontaler Richtung verlaufenden Stromsammelschiene, umfassend zumindest einen Frontplattenabschnitt wie oben beschrieben.

Die Installationsgeräte können zumindest eines der folgenden Geräte umfassen: Motorsteuergerät, Stromversorgungsgerät, Adapter für elektrische Geräte, Messgerät, Anzeigegerät, Netzteil, Sicherungshalter, Lasttrennschalter, Lasttrennschalter mit Sicherungen, Sicherungslasttrennschalter, Überspannungsschutzgerät, Blitzschutzgerät, Kommunikationsgerät, Fehlerstromschutzschalter, Entstörgerät.

Die Erfindung ermöglicht somit eine zuverlässigere Befestigung von elektrischen Installationsgeräten wie z.B. Sammelschienenadaptern, was insbesondere dann, wenn die gesamte Anordnung Vibrationen oder anderen Bewegungen ausgesetzt ist, Funktionsstörungen vermeidet.

Der erfindungsgemäße Frontplattenabschnitt kann aus Kunststoff gefertigt sein.

Die Erfindung und Ausführungsformen davon werden anhand der Figuren näher beschrieben. Hierin zeigt
- Fig. 1: einen erfindungsgemäßen Frontplattenabschnitt;
- Fig. 2: den Frontplattenabschnitt gemäß Fig. 1 mit aufgesetztem Installationsgerät einer ersten Variante;
- Fig. 3: den Frontplattenabschnitt gemäß Fig. 1 mit aufgesetztem Installationsgerät einer zweiten Variante;
- Fig. 4: einen Frontplattenabschnitt gemäß einer weiteren Ausführungsform; und
- Fig. 5: einen Frontplattenabschnitt gemäß noch einer weiteren Ausführungsform.

Im Folgenden sei unterstellt, dass die Stromsammelschienen 40 an einer vertikalen Ebene (z.B. an einer Wand in einer Schaltschrankanordnung, die nicht dargestellt sind) parallel zueinander angeordnet sind und sich jeweils in einer Richtung y erstrecken. Die y-Richtung kann - muss aber nicht - die Horizontale sein. In den nachfolgenden Beispielen ist dies nur aus Gründen der einfacheren Veranschaulichung so gewählt.

Orientierungen von Installationsgeräten (z.B. Sammelschienenadapter) 100 beziehen sich auf deren bestimmungemäße Anordnung an den Stromsammelschienen 40. Üblicherweise werden Installationsgeräte in einer Richtung x, die orthogonal zur Richtung y ist, auf den Stromsammelschienen montiert, so dass sie alle Stromsammelschienen überdecken.

Die Richtung x, die hier auch als Längsrichtung x bezeichnet wird, ist bei horizontaler Erstreckung der Stromsammelschiene also die Vertikale. Die positive vertikale Richtung x zeigt dann nach oben, die negative vertikale Richtung zeigt nach unten.

Unter "horizontal, "vertikal", "vor", "Frontseite" oder "Vorderseite" von Elementen (Stromsammelschienen 40, Installationsgeräte 100 oder Teile davon) wird die jeweilige Orientierung bzw. Draufsicht verstanden, wenn die Elemente bestimmungsgemäß angeordnet sind, also so, wie eine Person dies wahrnimmt, die den genannten angeordneten Elementen gegenübersteht.

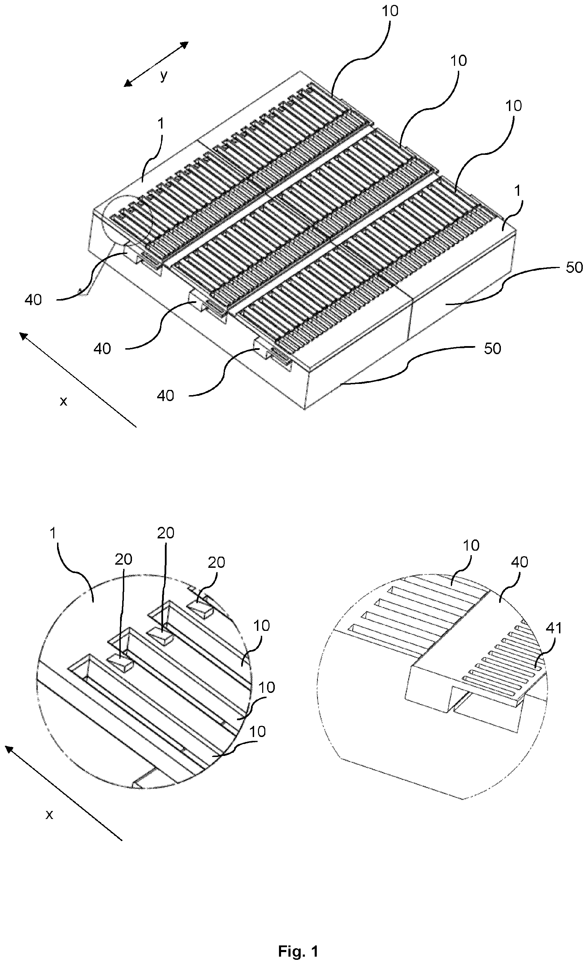

Fig. 1 zeigt eine Ausführungsform der vorliegenden Erfindung sowie Detailvergrö-ßerungen umfassend hier z.B. drei Stromsammelschienen 40, die ihrerseits übereinander, also in vertikaler Richtung x angeordnet sind und zueinander parallel in horizontaler Richtung y verlaufen. Der Frontplattenabschnitt 1 ist Teil eines Berührungsschutzsystems, das vor dem Stromsammelschienensystem angeordnet ist und Personen vor elektrischen Schlägen beim Hantieren mit Installationsgeräten 100 bewahren soll. Das Berührungsschutzsystem ist kastenförmig ausgestaltet und umfasst neben einem oder mehreren Frontplattenabschnitten 1 Seitenabschnitte 50.

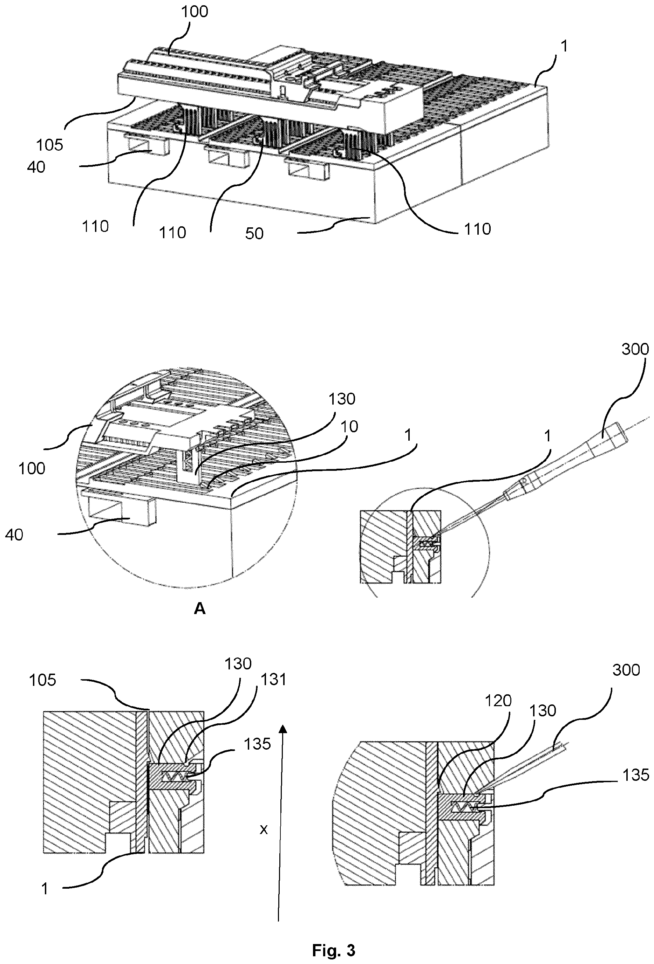

Der Frontplattenabschnitt 1 umfasst auf seiner Montagebene 5, also auf seiner Frontseite, Durchlassschlitze 10, durch welche Installationsgeräte 100 mit ihren Fü-ßen 110 (Fig. 3) hindurchgreifen, um auf der Montagebene 5 platziert und auf die Stromsammelschienen 40 aufgesetzt zu werden.

Auf der Montagebene 5 des Frontplattenabschnitts 1 angeordnet sind Vorsprünge 20, welche die aufgesetzten Installationsgeräte 100 gegen Bewegung in vertikaler Richtung x nach oben (positive x-Richtung) blockieren. Die Vorsprünge 20 verjüngen sich in positiver vertikaler Richtung x. Die Vorsprünge 20 weisen jeweils eine in vertikaler Richtung verlaufende keilförmige Fläche auf und weisen jeweils eine horizontal von der Montagebene 5 vorspringende und nach unten gerichtete Anschlagsfläche auf.

Die Vorsprünge 20 sind regelmäßig über die Montagebene 5 verteilt und in die Montagebene 5 integriert. Die Vorsprünge20 sind auf einer horizontalen Geraden jeweils zwischen zwei Durchlassschlitzen 10 angeordnet. Zwar umfasst das Frontplattenelement 1 mehrere untereinander angeordnete horizontale Reihen von Durchlassschlitzen 10, die Vorsprünge 20 sind aber nur zwischen zwei Durchlassschlitzen der obersten Reihe von Durchlassschlitzen 10 angeordnet.

Die Vorsprünge 20 sind dazu bestimmt, die Bewegung der montierten Installationsgeräte 100 im Zusammenwirken mit Strukturen an den Installationsgeräten 100 zu verhindern. Hierbei realisieren die Vorsprünge Teile von lösbaren Rastvorrichtungen.

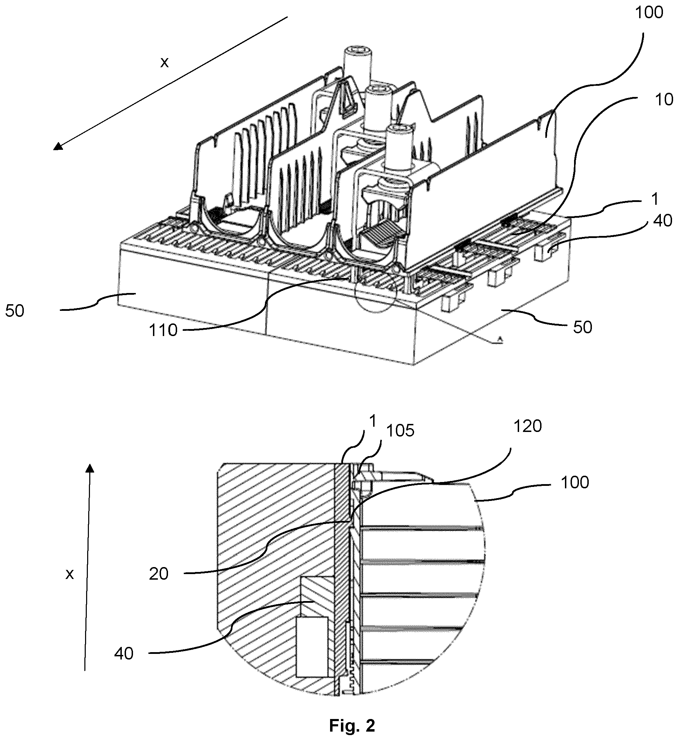

Fig. 2 zeigt dies anhand eines an dem Frontplattenabschnitt 1 angebrachten Installationsgeräts 100 sowie Detailvergrößerungen. Vom Installationsgerät 100 ist lediglich ein Teil illustriert. Das Installationsgerät 100 ist an dem Stromsammelschienensystem eingehängt, z.B. mittels hakenförmiger Füße 110 (siehe Fig. 3), die durch die Durchlassschlitze 10 hindurchgreifen, und somit gegen Herunterfallen gesichert. Alternativ kann das Installationsgerät auch mittels Schrauben befestigt sein, die durch Füße 110, die ebenfalls durch die Durchlassschlitze 10 hindurchtreten, auf Abstand gehalten werden.

Jedes Installationsgerät 100 umfasst auf seiner Rückseite 105, also derjenigen Seite, die der Montageebene 5 des Frontplattenabschnitts 1 zugewandt ist, Strukturen 120, welche bei Montage gegen die Vorsprünge 2 des Frontplattenabschnitts 1 der Anordnung anschlagen. Diese Strukturen können komplementär zu den Vorsprüngen 20, also z.B. als Ausnehmungen 120 in der Oberfläche der Rückseite 105 ausgestaltet sein.

Wenn also das Installationsgerät 100 mit seiner Rückseite 105 bei Montage mit dem Frontplattenabschnitt 1 in Kontakt ist, greifen die Ausnehmungen 120 in die Vorsprünge 20 ein. Weil die Vorsprünge 20 jeweils eine horizontale Fläche aufweisen und sich nach oben verjüngen, kann sich das Installationsgerät 100 nicht in positiver vertikaler Richtung x, also nach oben, bewegen. Dies schafft einen Vibrationsschutz.

Fig. 3 illustriert eine weitere Ausführungsform der Erfindung sowie Detailvergrö-ßerungen. Hierbei umfassen die Strukturen an der Rückseite 105 des Installationsgeräts 100 einen Bolzen 130, der die komplementäre Anschlagsfläche bildet. Der Bolzen 130 wird durch die Kraft einer Feder 135 in seiner Position, in der er die Anschlagsfläche bildet, gehalten, kann aber gegen die Federkraft aus dieser Position zurückbewegt werden, so dass das Installationsgerät 100, auch wenn es mit seiner Rückseite 105 in Kontakt mit der Montageebene 5 ist, nach oben bewegt werden. Dann erst lässt sich das Installationsgerät 100, wenn es z.B. durch hakenförmige Füße 110 eingehängt ist, wieder lösen durch Verschieben des Installationsgeräts 100 vertikal nach oben, nachdem der Bolzen 130 mittels eines Werkzeugs 300 zurückgezogen wurde. Somit ist das Installationsgerät besonders gut gegen Lösen durch zufällige Berührung oder Bewegung geschützt. Das Lösen des Installationsgeräts erfordert also ein gezieltes Handeln mit einem Werkzeug.

Andererseits kann der Bolzen 130 auch über den keilförmigen Vorsprung 20 gleiten, wenn das Installationsgerät 100 beim Einhängen der hakenförmigen Füße 110 mit seiner Rückseite 105 in Kontakt mit der Montageebene 5 des Frontplattenabschnitts 1 gebracht wird und hierbei vertikal nach unten bewegt wird. Bei dieser Ausgestaltung sind der Vorsprung 20 und der Bolzen 130 Teil einer Rastverbindung.

Damit das Werkzeug 300 an den Bolzen 130 angreifen kann, umfasst der Bolzen 130 auf seiner Mantelfläche eine Rille 131 als Angriffsstruktur.

In Detail Ader Fig. 3 ist die Rückseite 105 des Installationsgeräts nicht dargestellt.

Der erfindungsgemäße Frontplattenabschnitt aller Ausführungsformen kann aus elektrisch isolierendem Kunststoff gefertigt sein.

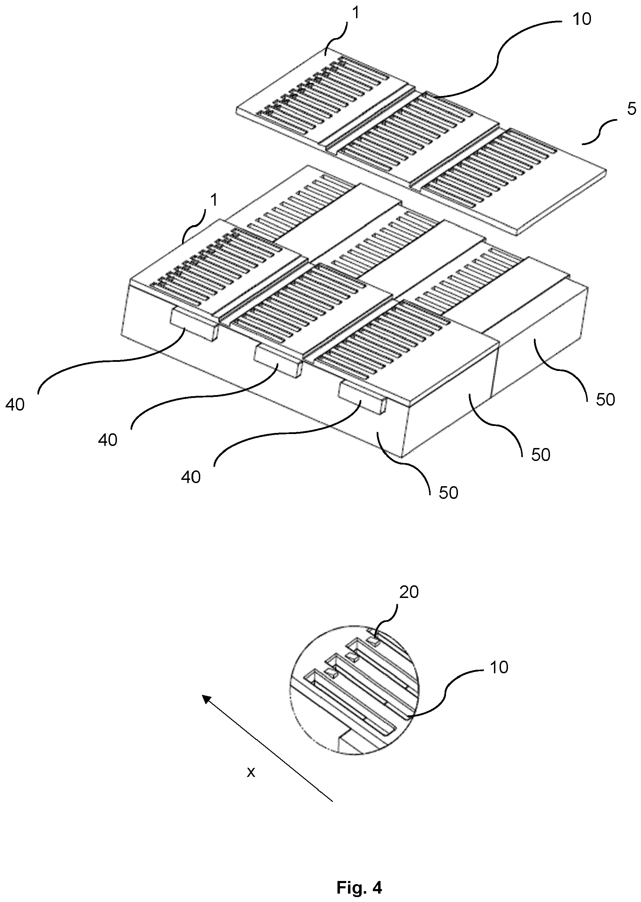

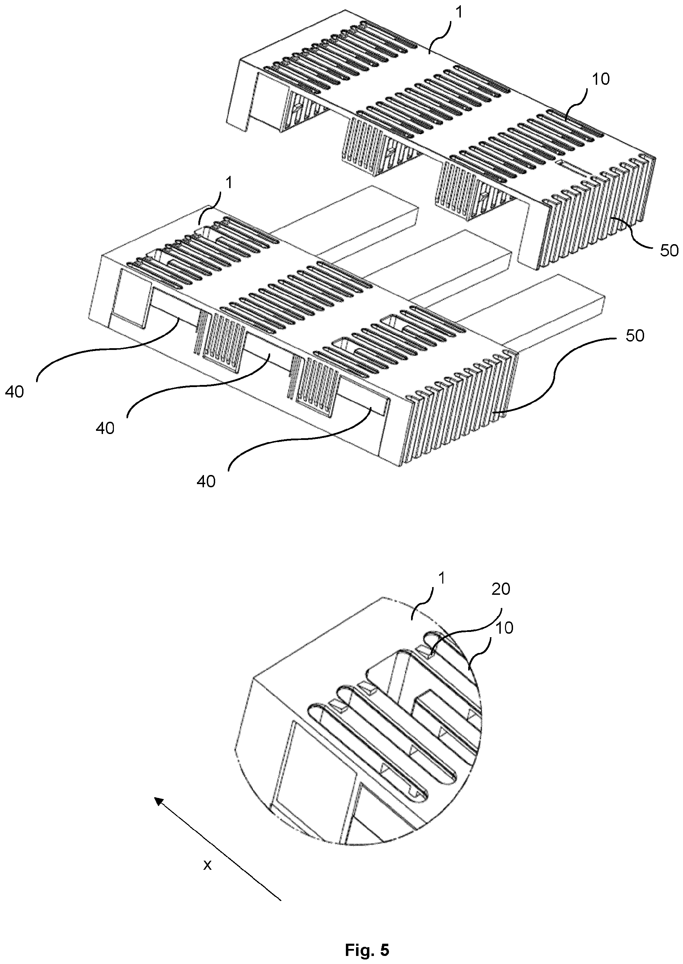

Die Stromsammelschienen 40 in den Ausführungsformen der Fig. 1 bis Fig. 3 haben Schlitze 41 in einem Bereich geringeren Querschnitts. Der konkrete Querschnitt der Stromsammelschienen 40 und ihrer Schlitze 41 sowie die übrige Ausgestaltung des Berührungsschutzsystems spielen für die vorliegende Erfindung jedoch keine Rolle. Fig. 4 und Fig. 5 zeigen einen Frontplattenabschnitt 1 für Stromsammelschienen 40 mit rechteckigem Querschnitt und ohne Schlitze sowie unterschiedlich ausgestaltete Berührungsschutzsysteme und Detailvergrößerungen.

Die Erfindung ist nicht auf Stromsammelschienensysteme mit genau drei horizontalen Stromschienen beschränkt, wie sie in den Beispielen gezeigt sind. So funktioniert die Erfindung auch mit Stromsammelschienensystemen, die weniger als drei Stromsammelschienen aufweisen, wie etwa Gleichstrom-Sammelschienensysteme (DC System mit 2 Schienen) oder auch 4- und 5-polige AC Systeme mit N- oder N- und PE-Leitern.

### Liste der Bezugszeichen

- 1: Frontplattenabschnitt
- 5: Montageebene
- 10: Durchlassschlitz
- 20: Vorsprung
- 40: Stromsammelschiene
- 41: Stromsammelschienen-Schlitz
- 50: Seitenwand
- 100: Installationsgerät
- 105: Rückseite
- 110: Fuß, hakenförmiger Fuß
- 120: Ausnehmung, Struktur
- 130: Bolzen
- 131: Angriffsstruktur, Rille
- 135: Feder
- 300: Werkzeug

- x: Längsrichtung, vertikale Richtung
- y: horizontale Richtung

## Patentansprüche

1. Frontplattenabschnitt (1) für eine Anordnung zur berührungssicheren Montage von Installationsgeräten (100) an einem Stromsammelschienensystem mit zumindest einer in einer ersten Richtung (y) verlaufenden Stromsammelschiene (40), wobei der Frontplattenabschnitt (1) das Stromsammelschienensystem vor frontseitiger Berührung schützt, wobei der Frontplattenabschnitt (1) auf seiner Montageebene (5) Durchlassschlitze (10) aufweist, durch welche montierte Installationsgeräte (100) mit Füßen (110) hindurchgreifen, um auf der Montageebene (5) angeordnet und auf das Stromsammelschienensystem aufgesetzt zu werden, und
wobei auf der Montageebene (5) Vorsprünge (20) angeordnet sind, welche die montierten Installationsgeräte (100) gegen Bewegung in einer zweiten Richtung (x) blockieren, wobei die zweite Richtung (x) orthogonal zur ersten Richtung (y) ist.

2. Frontplattenabschnitt (1) nach Anspruch 1, wobei die erste Richtung (y) eine horizontale Richtung ist und die zweite Richtung die positive vertikale Richtung ist.

3. Frontplattenabschnitt (1) nach Anspruch 1 oder 2, wobei sich die Vorsprünge in positiver vertikaler Richtung (x) verjüngen.

4. Frontplattenabschnitt (1) nach Anspruch 3, wobei die Vorsprünge (20) jeweils eine in vertikaler Richtung (x) verlaufende keilförmige Fläche aufweisen.

5. Frontplattenabschnitt (1) nach einem der vorherigen Ansprüche, wobei die Vorsprünge (20) jeweils eine in von der Montageebene (5) vorspringende und in negativer vertikaler Richtung (x) gerichtete Anschlagsfläche aufweisen.

6. Frontplattenabschnitt (1) nach einem der vorherigen Ansprüche, wobei die Vorsprünge (20) regelmäßig über die Montageebene (5) verteilt sind.

7. Frontplattenabschnitt (1) nach einem der vorherigen Ansprüche, wobei die Vorsprünge (20) in die Montageebene (5) integriert sind.

8. Frontplattenabschnitt (1) nach einem der vorherigen Ansprüche, wobei die Vorsprünge (20) auf einer horizontalen Geraden jeweils zwischen zwei Durchlassschlitzen (10) angeordnet sind.

9. Frontplattenabschnitt (1) nach einem der vorherigen Ansprüche, wobei das Frontplattenelement (1) mehrere untereinander angeordnete horizontale Reihen von Durchlassschlitzen (10) aufweist und die Vorsprünge (20) nur zwischen zwei Durchlassschlitzen (10) der obersten Reihe angeordnet sind.

10. Frontplattenabschnitt (1) nach einem der vorherigen Ansprüche, wobei die Vorsprünge (20) die Bewegung der Installationsgeräte (100) im Zusammenwirken mit Strukturen an den Installationsgeräten (100) verhindern.

11. Anordnung (1) nach einem der vorherigen Ansprüche, wobei die Vorsprünge (20) Teile von lösbaren Rastvorrichtungen realisieren.

12. Frontplattenabschnitt (1) nach einem der vorherigen Ansprüche, wobei die Vorsprünge (20) ein Aufschieben der Installationsgeräte (20) über die keilförmige Fläche in negativer vertikaler Richtung (x) gestatten.

13. Installationsgerät (100) zur Montage an der Montageebene (5) eines Frontplattenabschnitts (1) gemäß einem der vorherigen Ansprüche, aufweisend auf seiner bei Montage der Montageebene (5) zugewandten Rückseite (105):
Füße (110), welche zum Hindurchgreifen durch die Durchlassschlitze (10) des Frontplattenabschnitts (1) ausgestaltet sind, und
Strukturen (120), welche bei Montage gegen die Vorsprünge (20) des Frontplattenabschnitts (1) anschlagen.

14. Installationsgerät (100) nach dem vorhergehenden Anspruch, wobei die Strukturen (120) zu den Vorsprüngen komplementäre Formen aufweisen.

15. Installationsgerät (100) nach Anspruch 13 oder 14 wobei die Strukturen (120) jeweils einen Bolzen (130) aufweisen, der durch Kraft einer Feder (135) in einer vorbestimmten Position bezüglich der Montageebene (5) gehalten wird.

16. Installationsgerät (100) nach Anspruch 15, wobei der Bolzen (130) eine Angriffsstruktur (131) aufweist, mittels derer der Bolzen (130) entgegen der Kraft der Feder (135) aus der vorbestimmten Position zurückbewegt werden kann, optional nur mittels eines vorbestimmten Werkzeugs (300).

17. Anordnung zur berührungssicheren Montage von Installationsgeräten (100), insbesondere solchen nach einem der Ansprüche 13 bis 16, an einem Stromsammelschienensystem mit zumindest einer in horizontaler Richtung (y) verlaufenden Stromsammelschiene (40), umfassend zumindest einen Frontplattenabschnitt (1) gemäß einem der Ansprüche 1 bis 12.

18. Anordnung gemäß Anspruch 17, wobei die Installationsgeräte (100) zumindest eines der folgenden Geräte umfassen:
Motorsteuergerät,
Stromversorgungsgerät,
Adapter für elektrische Geräte,
Messgerät,
Anzeigegerät,
Netzteil,
Sicherungshalter,
Lasttrennschalter,
Lasttrennschalter mit Sicherungen,
Sicherungslasttrennschalter,
Überspannungsschutzgerät,
Blitzschutzgerät,
Kommunikationsgerät,
Fehlerstromschutzschalter,
Entstörgerät.
